# EUROPEAN PATENT SPECIFICATION

(11) **EP 4 597 341 B1**
(45) Date of publication and mention of the grant of the patent: **14.01.2026**
(21) Application number: 24155529.1
(22) Date of filing: 02.02.2024
(51) Int. Cl.: G06F 21/31, G06F 21/55

(54) **FRAUD DETECTION SYSTEM AND METHOD**
BETRUGSERKENNUNGSSYSTEM UND -VERFAHREN
SYSTÈME ET PROCÉDÉ DE DÉTECTION DE FRAUDE

(43) Date of publication of application: 06.08.2025
(73) Proprietor: ThreatFabric B.V., 1043 NT Amsterdam (NL)
(72) Inventor: Farajian, Nima, 1043 NT Amsterdam (NL); Silva, Adriana, 1043 NT Amsterdam (NL); Ibrahem, Rafee, 1043 NT Amsterdam (NL); Pychtjarow, Magda, 1043 NT Amsterdam (NL)
(74) Representative: De Vries & Metman

(56) References cited:
- CN-A- 110 808 995
- CN-A- 111 625 789
- BAILEY KYLE O ET AL: "User identification and authentication using multi-modal behavioral biometrics", COMPUTERS & SECURITY, ELSEVIER SCIENCE PUBLISHERS. AMSTERDAM, NL, vol. 43, 25 March 2014 (2014-03-25), pages 77 - 89, XP029020684, ISSN: 0167-4048, DOI: 10.1016/J.COSE.2014.03.005

## Description

### TECHNICAL FIELD

The present disclosure relates to fraud detection system, a fraud detection method, a computer program for this method and a user device for use with the system and/or method. In particular, the present disclosure relates to a fraud detection system configured to detect anomalous user behaviour on views, such as webpages or app views on pc or mobile devices respectively during a user session of a user device with an online system presenting the views to the user device.

### BACKGROUND

Fraud is a broad and evolving field encompassing various types of deceptive activities that can have significant negative impacts on both individuals and organizations. Several forms of fraud can be distinguished, such as boiler room fraud, identity theft, dating fraud, and social media fraud. All forms of fraud can result in significant financial losses for individuals and businesses, including stolen funds, legal expenses, and costs associated with resolving the fraud. Fraud incidents can disrupt an organization's operations and lead to additional expenses in terms of security measures, investigations, and compliance efforts.

To combat these various forms of fraud, individuals and organizations need to be vigilant, employ security measures, and stay informed about evolving fraud tactics. Prevention, detection, and response strategies are essential to mitigate the impact of fraud on both personal and organizational levels.

Traditional methods to detect fraud have relied on statistical techniques or rule-based systems. However, these conventional approaches have inherent limitations in effectively identifying new or evolving fraud patterns. These methods are vulnerable to evasion by sophisticated fraudsters, often resulting in delayed fraud detection, where the fraudulent activity was only identified after the transaction had taken place. In some cases, for example, banks were unable to detect fraudulent activities until clients reported them.

To address the shortcomings of traditional methods, biometric identification methods emerged, utilizing features like iris scans, fingerprints, and gestures. While these methods are more reliable, they were impractical and time-consuming, as individuals required specialized devices to perform identification, making the process tedious and costly. Furthermore, the biometric identification data are very sensitive both in terms of their usage and storage, given the stringent regulations outlined in the General Data Protection Regulation (GDPR) and the designed laws to protect customer rights and privacy.

Recognizing the need for a more efficient and accurate solution, the concept of behavioural analytics derived from user profiles have been introduced, where individual profile models are created based on user behaviour, such as typing speed, key press and release times, key hold times, or a combination of these factors. However, this method faces challenges, as it requires substantial data for each user to develop accurate and reliable user profiles. Waiting for sufficient data per user before creating their profile models can introduce impractical delays. Even after obtaining an individual profile model, it remains susceptible to inaccuracies due to deviations in user behaviour resulting from different user-activities or conditions (e.g., eating, driving, moving, or typing with one hand). Such deviations can be wrongly interpreted as fraudulent activities. Furthermore, the process of identifying users based on their individual models and fetching these models separately for each user is time-consuming and could lead to significant time overhead and unnecessary costs.

Kyle O. Bailey et al disclose in the article "User Identification and authentication using multimodal behavioral biometrics", Computers and Security, Elsevier Science Publishers, vol. 43, 25 March 2014, pages 77-89 (DOI: 10.1016/J.COSE.2014.03.005) a behavioral biometric system that fuses user data from keyboard, mouse, and Graphical User Interface (GUI) interactions to obtain an authentication decision based on the users computer activity while requiring less user interaction to train the system. Identification is the process of determining who the user is, while authentication is used to confirm the validity of that identity. An ensemble based decision level architecture is disclosed wherein each modality (keyboard, mouse, GUI) is classified individually with the result of those classifications sent to a final classifier that produces a decision. Sliding windows samples of 10 minutes are completed, wherein each window sample contains all of the keystroke, mouse and GUID features with a two minute sampling interval CN 110808995 discloses a security protection wherein behavioral data are acquired generated by a target auxiliary device in response to a user operation. Characteristic data are determined based on the behavioural data to characterize behavioral characteristics of the target auxiliary device. The characteristic data are fed into a predetermined prediction model to obtain a corresponding prediction result and, based on the prediction result, it is determined whether the subject of the user operation is a robot.

CN 111625789 discloses a user identification method based on multi-core learning and fusion of mouse and keyboard behavioral features. The method includes the steps of obtaining two types of human-computer interaction data of keyboard and mouse and performing feature extraction on keyboard and mouse features. The method further includes performing feature mapping based on multi-core learning algorithm and the use of a classifier to model and perform user identification.

### SUMMARY

The present disclosure provides for a balance between accurate and fast detection of fraud while requiring little to no burden for the user with the user device during a user session with an online system.

To that end, one aspect of the disclosure pertains to a fraud detection system configured to detect anomalous user behaviour on views, such as web pages or mobile app views, during a user session of a user device with an online system presenting the views to the user device. Each view of the views may correspond to a sub-session of a plurality of sub-sessions of the user session. The fraud detection system comprises at least a first generic fraud detection trained sensor model relating to a first type of user action on the views and a second generic fraud detection trained sensor model relating to a second type of user action on the views of the plurality of views. The fraud detection system is further configured to obtain and process first user action data for a view of the views from the user device corresponding to the first type of user action and second user action data for the view of the views corresponding to the second type of user action. The fraud detection system may also comprise a first aggregator configured to aggregate the obtained and processed first user action data on a per view basis to obtain at least one aggregated first sensor datum and to provide the at least one aggregated first sensor datum from the processed first user action data for the view for input into the first generic fraud detection trained sensor model. The fraud detection system may also comprise a second aggregator configured to aggregate the obtained and processed second user action data on a per view basis to obtain at least one aggregated second sensor datum and to provide the at least one aggregated second sensor datum from the processed second user action data for the view corresponding to the sub-session of the plurality of sub-sessions of the user session for input into the second generic fraud detection trained sensor model.

Another aspect of the disclosure relates to a fraud detection method in a fraud detection system for detecting anomalous user behaviour on views, such as web pages or mobile app views, during a user session of a user device with an online system presenting the views to the user device. The fraud detection system comprises at least a first generic fraud detection trained sensor model relating to a first type of user action on the views and a second generic fraud detection trained sensor model relating to a second type of user action on the views of the plurality of views. One step of the method involves obtaining and processing first user action data from the user device corresponding to the first type of user action and second user action data corresponding to the second type of user action.

The method may further include the steps of aggregating the obtained and processed first user action data on a per view basis to obtain at least one aggregated first sensor datum and providing the at least one aggregated first sensor datum from the processed first user action data for input into the first generic fraud detection trained sensor model. The method may also include the step of aggregating the obtained and processed second user action data on a per view basis to obtain at least one aggregated second sensor datum and providing the at least one aggregated second sensor datum from the processed second user action data for input into the second generic fraud detection trained sensor model.

Yet another aspect of the disclosure involves a computer program or suite of computer programs comprising one or more software code portions configured, when run on one or more computer systems, to perform this method.

A further aspect of the disclosure pertains to user device for use with the fraud detection system as disclosed herein or for use in the method as disclosed herein.

A further aspect of the disclosure amounts a combination of at least a fraud detection system and an online system as disclosed herein. The combination may be obtained through integration of the systems or as communicatively connected systems.

The first generic fraud detection trained sensor model and second generic fraud detection trained sensor model are separate machine learning models trained to distinguish between two types of classes, viz. genuine versus compromised sub-sessions based on their characteristics. The use of multiple sensor-specific models for different types of user action data (e.g. keystroke data, mouse/touch data, navigation data) corresponding to different types of user actions by a user on view presented to the user enables the fraud detection system to have a model focussed on particular types of user action thereby improving the model's accuracy. It should be appreciated that the models operate on the basis of user action data received for a view instead of for a particular input field of a webpage, such as a web form, that normally only analyses user action data for that particular input field that may be insufficient and, hence, inaccurate.

The issues with the behavioural analytics on user profile level as described above are reduced or eliminated, since the machine learning models use a generic approach focused on detecting deviations from genuine user behaviour to identify distinct behaviour associated with fraudsters rather than relying on specific user models requiring substantial historical data from a particular user.

The accuracy of fraud detection is further improved through using specific aggregated sensor data provided for input into a corresponding one the sensor-specific models instead of the raw user action data, such as keystroke data, mouse/touch data and/or navigation data obtained from the user device. The aggregated sensor data specific to each machine learning model have also been used to train the separate models. During a sub-session the user action data are collected for processing to provide the at least one aggregated first sensor datum and at least one aggregated second sensor datum for input into the respective generic fraud detection trained sensor models. The creation of sub-sessions during the user session also enables a frequent assessment of the user behaviour during the user session to enable rapid fraud detection.

Thus, an expanded generic approach is disclosed to effectively detect fraud in new sessions from any user with high accuracy, even without specific historical data for that user. In this approach, the session is split into multiple sub-sessions. These sub-sessions may be created based on the information (for example, mouse and keystrokes) throughout the user interaction with the online system.

This approach provides more insight on the micro level of user activities which provides a more accurate fraud detection model. Furthermore, sub-sessions are applied on each type of user action (for example for keyboard strokes, mouse/touch, and navigation) separately rather than analysing all user action data together. By dividing the analysis of user action data based on their type and generating aggregated features, user type behaviour is modelled and analysed separately thereby boosting the accuracy per model.

It should be appreciated that the fraud detection system and online system may constitute a single system, a co-located system, a distributed system etc. In one example, the online system and fraud detection system are distributed and connected through one or more networks. The user device may be communicatively connected solely with the online system, for example over the one or more networks, which are possibly the same network or networks used for communication between the online system and fraud detection system to perform the fraud detection disclosed herein.

The processing of the raw first and second user action data may comprise the preparation of the user action data for input into the first and second aggregator, respectively. However, in one embodiment, the processing of the user action data may comprise feature engineering wherein the processor is configured to process the user action data by calculating first sensor input features from the user action data corresponding to the first type of user action for input into the first aggregator and second sensor input features from the user action data corresponding to the second type of user action for input into the second aggregator. The calculation of the sensor specific input features may provide more information (correlations, dependencies, etc.) specific to the type of user action about the user behaviour in comparison with feeding the raw user action data.

The termination of a sub-session, and, possibly, start of a new sub-session may be trigged by a user action, such as a user action on the presented view. In one embodiment, the fraud detection system may be configured to terminate a sub-session during the user session upon receiving a view change indication, for example a transition to a new web page or a new mobile app view. The processed user action data, such as the first and second sensor input features, during this now terminated sub-session may then be used for providing the at least one aggregated first and second sensor datum for input into the respective generic fraud detection trained sensor models. The next sub-session may start when user action data for the next view are obtained (or immediately when the new view is presented). The user action data obtained during the new sub-session may then be used for providing the at least one aggregated first and second sensor datum for the new sub-session.

In order to obtain aggregated sensor data of sufficient quality, the amount of user action data (e.g. the number of keystrokes, mouse/touch inputs and/or navigation actions) must be sufficient. In one embodiment, the fraud detection system may be configured to provide the at least one first aggregated sensor datum for a current sub-session of the plurality of sub-sessions based in part on first user action data received during at least one previous sub-session. The embodiment enables the fraud detection system to borrow previously obtained user action data for a specific type of user action during one or more previous sub-sessions, if any, to provide the at least one aggregated sensor datum of sufficient quality for that model. As an example, mouse action by the user during a sub-session may be insufficient to provide a sufficient number of mouse action data to provide an aggregated mouse sensor datum as input for the mouse action specific model, so that mouse action data from one or more previous sub-sessions may be borrowed to provide the aggregated mouse sensor datum. The fraud detection system may therefore be configured to store, at least temporarily, user action data from previous sub-sessions so that the user action data remain available for one or more future sub-session(s).

It should be appreciated that, alternatively or in addition, the fraud detection system may store the processed user action data, such as the sensor input features mentioned above, for the purpose of using this data to complete an input dataset for aggregation in the user action specific aggregators.

Since the fraud detection system applies separate models for each type of user action data, an insufficient amount user action data (and/or processed user action data, such as sensor input features) may be available to apply one or more of the models. In one embodiment, the fraud detection system may be configured to provide the at least one second aggregated sensor datum for the current sub-session based only on the second user action data obtained during the current sub-session. In other words, while for a given sub-session, insufficient user action data may have been obtained to provide one aggregated sensor datum for one corresponding sensor-specific model, the same sub-session may have sufficient user action data to provide another one of the aggregated sensor datum for another one of the sensor-specific models. As an example, while there is a lack of mouse action data as described above for a given sub-session, there may be a sufficient number of keystroke data to provide the aggregated keystroke datum for the same sub-session for the keystroke action specific model.

In one embodiment, the fraud detection system may be configured to apply at least one first threshold to determine whether the first user action data of at least one previous sub-session should be obtained as described above. The first threshold provides a setting to define the sufficient amount of user action data for a given sub-session. The first threshold may be defined for a specific type of user action (for example, one threshold may be set for keystroke data and another, possibly different, one for the mouse/touch data). The first threshold may have been determined to enable the provision of a first aggregated sensor datum of sufficient quality. For example, the first threshold for mouse action may be set to at least three mouse movements during a sub-session (which may not be achieved, because the user has used a tab-key one or more time to move a cursor, for example). In this case, the fraud detection system may determine that user action data from one or more previous sub-sessions, if any, should be borrowed to provide the first aggregated sensor datum of sufficient quality.

In one embodiment, the fraud detection system may be configured to apply at least one second threshold to determine whether the at least one first aggregated sensor datum should be provided for the first model. This second threshold provides a setting to define whether it is useful to apply a sensor specific model for a sub-session. The second threshold may be defined for a specific sensor (for example, one threshold may be set for keystrokes and another, possibly different, one for the mouse data). For example, if no mouse motion is detected, i.e. no mouse sensor data have been received during a sub-session, it is inefficient and/or unnecessary to run the mouse-specific model for this sub-session (for example, by borrowing all mouse data from a previous sub-session and run the mouse-specific model again). The output of the mouse-specific model, in this example, of the previous sub-session may be used instead for the current sub-session. The second threshold may generally be set to a lower value, in logical terms, than the first threshold.

In one embodiment, the fraud detection system may be configured to provide a detection result for the sub-session by combining at least a first output of the first generic fraud detection trained sensor model relating to the first type of user action on a view and a second output the second generic fraud detection trained sensor model relating to the second type of user action on the view. The embodiment facilitates using distinct sensor-specific models while having a single detection result for every sub-session, for example, for every view.

For a more enhanced fraud detection system, it is possible to include more types of user action to be considered in the disclosed fraud detection process. The user action data may include keystroke data, mouse/touch data, navigation data etc. In one embodiment, the receiver of the fraud detection system may be configured to obtain and process third user action data corresponding to a third type of user action. The fraud detection system may further comprise a third generic fraud detection trained sensor model relating to a third type of user action on the view of the views. The fraud detection system may further comprise a third aggregator configured to provide at least one aggregated third sensor datum from the processed third user action data for the sub-session of the plurality of sub-sessions of the user session for input into the third generic fraud detection trained sensor model.

In one embodiment, the fraud detection system is configured to provide a detection result for the sub-session by combining at least a first output of the first generic fraud detection trained sensor model relating to the first type of user action on a view, a second output of the second generic fraud detection trained sensor model relating to the second type of user action on the view and a third output of the third generic fraud detection trained sensor model relating to the third type of user action on the view. The embodiment facilitates using distinct sensor-specific models while having a single detection result for every sub-session.

In one embodiment, the fraud detection system may be configured to terminate or trigger termination, for example by sending an alert to the online system, of the user session of the user device with the online system dependent on the detection result. The detection result may be an overall score that is assessed against a fraud threshold or fraud criterion. As a result of the division of the user session into sub-sessions, the termination or trigger thereof may be initiated on a sub-session time scale. It should be noted that, in addition or instead of terminating and/or triggering termination of the user session, the detection result may be communicated to the online system, be stored for future use, such as enhanced scrutiny on future actions of the user, etc.

In one embodiment, the fraud detection system may be configured such that the user action data relating to the first type of user action relates to one of keystroke data, mouse/touch input data and navigation data of the user device and the user action data relating to the second type of user action relates to another one of keystroke data, mouse/touch input data and navigation data. Optionally, if present, the third user action data relating to the third type of user action relates to a third one of keystroke data, at mouse/touch input data and navigation data of the user device. The embodiment provides for a fraud detection system assessing at least keystrokes, mouse/touch data and navigation data from the user device to detect fraudulent behaviour.

In one embodiment, the fraud detection system may be configured such that at least one of the at least one first aggregated sensor datum and the at least one second aggregated sensor datum is an aggregated sensor datum in the frequency domain, such as at least one of entropy and energy of the first user action data or sensor related features and the second user action data or sensor related features. The frequency domain provides for better noise- and other disturbance resistance for the model.

In one embodiment, the fraud detection system may be configured such that at least one of the at least one first aggregated sensor datum and the at least one second aggregated sensor datum is an aggregated sensor datum in the time domain, such as at least one of variance, skewness, kurtosis and percentile of the first user action data or sensor related features and the second user action data or sensor related features. The time domain analysis provides for an adequate tracking of user behaviour over time, i.e. during the sub-session and/or during the user session.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java, Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 is an exemplary embodiment of a communication system comprising a user device, an online system and a fraud detection system;
FIG. 2 is an exemplary embodiment of a fraud detection system for use in the communication system of FIG. 1;
FIGS. 3A and 3B provide practical examples of feature engineering to obtain aggregated sensor input data for input into machine learning models;
FIG. 4 is an exemplary embodiment of a user session of a user device with an online system showing sub-sessions of the user session;
FIG. 5 is an exemplary embodiment of using user action data or sensor input features from previous sub-session(s) for obtaining a detection result;
FIG. 6 is an exemplary embodiment of combining outputs of distinct models for different types of user actions for a view to obtain an overall detection result for a sub-session; and
FIG. 7 depicts an example of a processing system according to an embodiment of a user device, online system or fraud detection system or a part thereof.

### DETAILED DESCRIPTION OF THE DRAWINGS

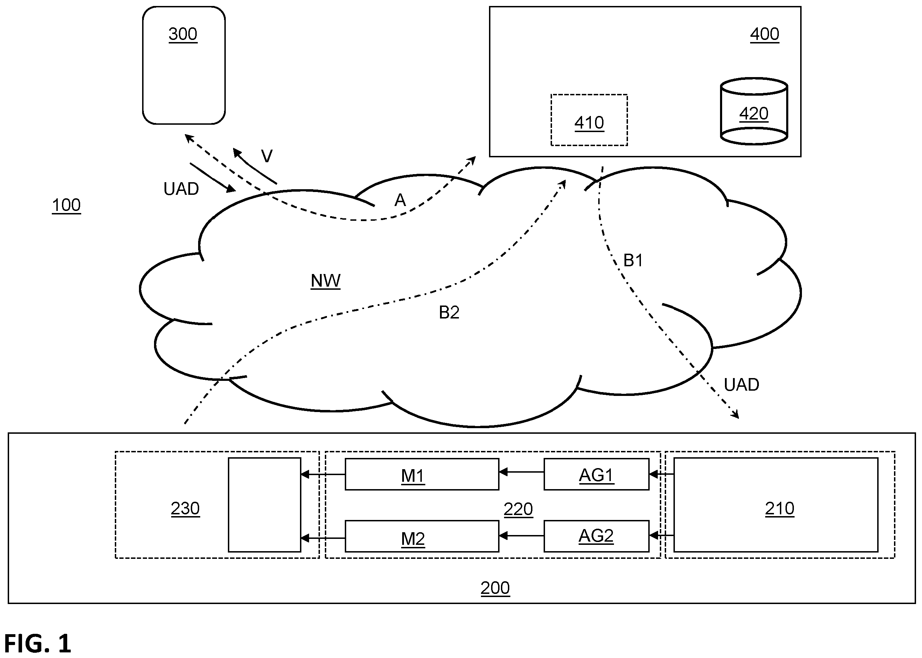

FIG. 1 depicts a communication system 100 comprising a fraud detection system 200 configured to analyse user action data from a user of a user device 300 communicating with an online system 400. Online system 400 may comprise an online bank system, retail system, government system etc. Communications may occur over one or more networks, indicated as NW in general. It should be appreciated that fraud detection system 200, or components thereof, may be integrated in another system, such as in online system 400. Also, components of fraud detection system 200 may be distributed over the network(s) NW as may the (component of) online system 400.

Dashed arrow A indicates bidirectional communications between user device 300 and online system 400 during a user session. The communications may include online system 400 presenting views V, such as web pages or mobile app views, to user device 300. In addition, user action data UAD, such as keystroke data K, mouse/touch data MT (mouse data if the user device enables a mouse pointer; touch data if user device 300 is a touch sensitive device or both if the user device enables both), navigation data N (for example, moving from one input field to another), also referred to as sensors, and may be received at the online system 400..

Communications between fraud detection system 200 and online system 400 are shown by depicted arrows B1 and B2 for reasons of clarity. While the communications are shown separately, the communication may also be bidirectional. Online system 400 provides the user action data UAD to the fraud detection system 200, but may also provide other information, such as view change indications (for example, when a user moves from one web page to another). It should be noted that online system 400 may only send a selection of the user action data UAD

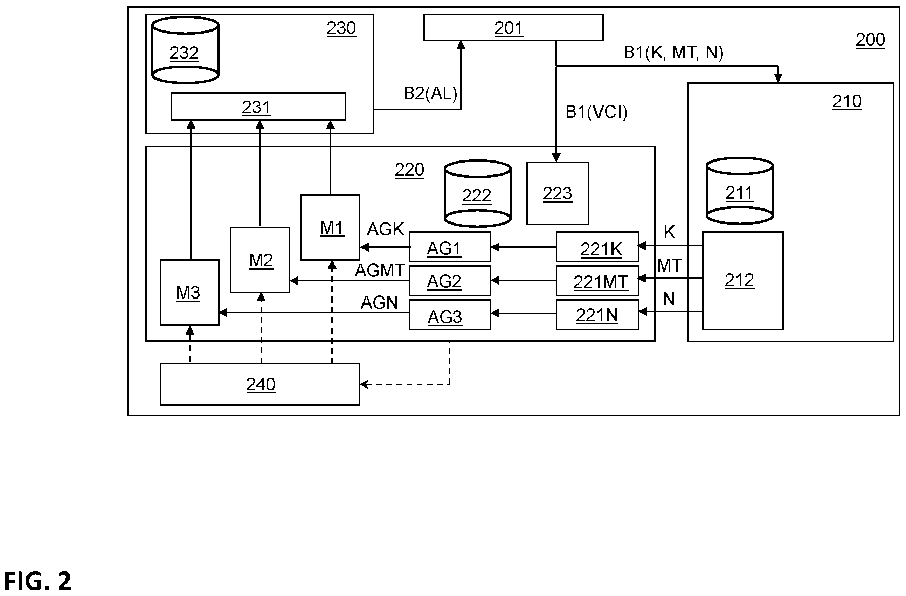

Fraud detection system 200 comprises a data collection unit 210, a data analysis unit 220 and a detection result unit 230. Fraud detection system 200 is configured to detect anomalous user behaviour on views V during a user session of user device 300 with online system 400 presenting the views V to the user device 300. User device 300 and/or online system 400 may comprise software to collect the required data, such as user action data UAD and/or view change indications. This software may be injected into the website or mobile app that the online system 400 presents to the user device 300, as shown by module 410. Online system 400 may also contain a database 420 for storing user action data to provide these to fraud detection system 200 from time to time or upon request from fraud detection system 200. The data may be labelled in classes fraud vs. compliant behaviour and may be used for training the models in fraud detection system 200 as shown in more detail in FIG. 2.

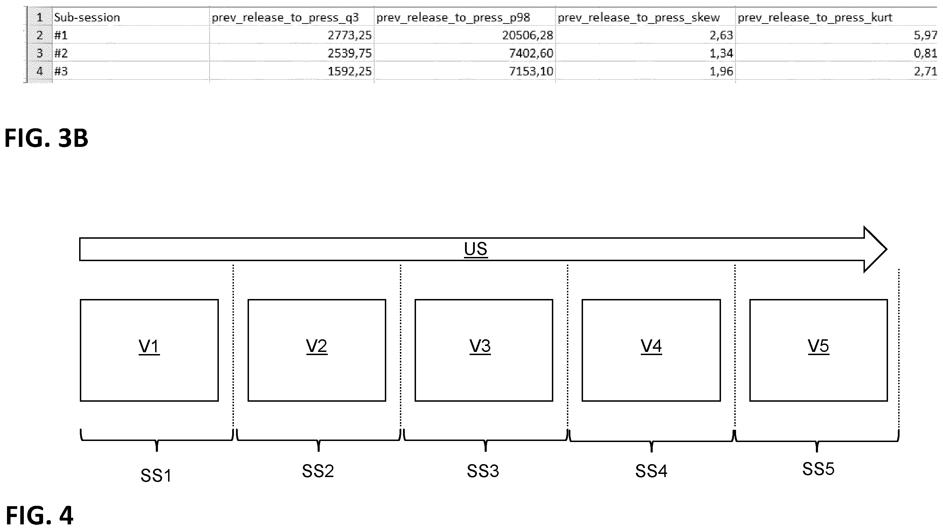

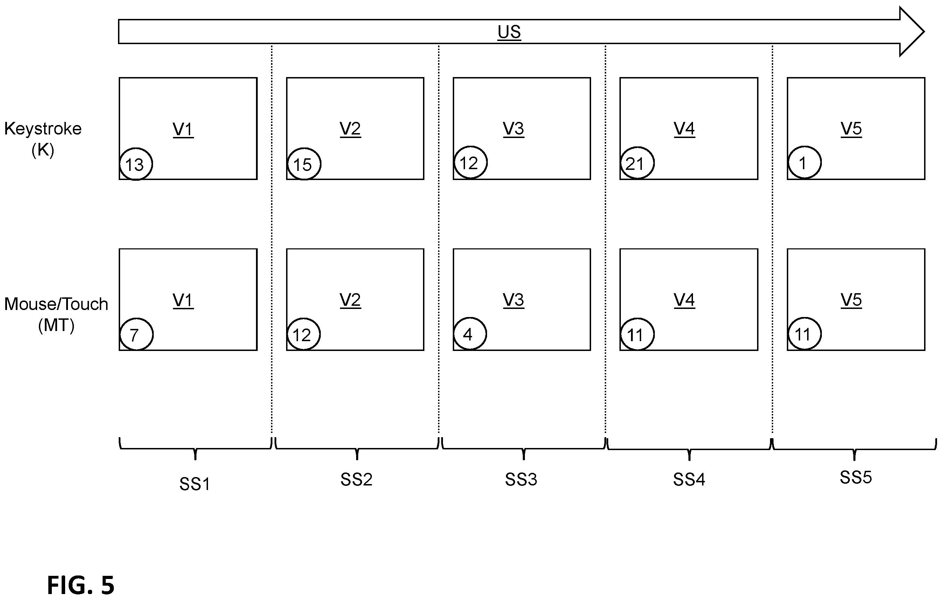

Data collection unit 210 obtains user action data from the online system 400 and possibly also view change indications as will be described in further detail with reference to FIGS. 4 and 5. It should be noted that fraud detection system 200 may receive these data from other entities, such as directly from user device 300 or other intermediate systems. Data collection unit 210 may also pre-process the user action data as shown in FIG. 2.

Data analysis unit 220 may comprise a first generic fraud detection trained sensor model M1 relating to a first type of user action on the views, for example key strokes of the user on user device 300 for which the fraud detection system 200 receives key stroke data K as shown in FIG. 2. Data analysis unit 220 further comprises a second generic fraud detection trained sensor model M2 relating to a second type of user action on the views, for example mouse movement or touches from a user on user device 300 for which the fraud detection system 200 receives mouse and/or touch data MT, hereinafter mouse/touch data MT, as shown in FIG. 2.

In order to enhance security, the models M1, M2 are provided with aggregated sensor data, using a first aggregator AG1 and a second aggregator AG2 configured to provide, respectively, at least one aggregated first sensor datum from the processed first user action data for a sub-session of the user session for input into the first generic fraud detection trained sensor model M1, and at least one aggregated second sensor datum from the processed second user action data for the sub-session of the user session for input into the second generic fraud detection trained sensor model M2.

The first generic fraud detection trained sensor model M1 and second generic fraud detection trained sensor model M2 are separate machine learning models trained to distinguish between two types of classes, viz. genuine versus compromised sub-sessions based on their characteristics. The use of multiple sensor-specific models M1, M2 for different types of user action data (e.g. for two of keystroke data K, mouse/touch data MT, navigation data N) corresponding to different types of user actions by a user during a sub-session enables the fraud detection system 200 to have a model focussed on particular types of user action thereby improving the model's accuracy.

The accuracy of fraud detection is further improved through using specific aggregated sensor data provided for input into a corresponding one the sensor-specific models M1, M2 instead of the raw user action data, such as keystroke data K, mouse/touch data MT and/or navigation data N of the user device 300 provided to the fraud detection system 200. The aggregated sensor data specific to each machine learning model have also been used to train the separate sensor-specific models. During a sub-session the user action data are collected for processing to provide the at least one aggregated first sensor datum and at least one aggregated second sensor datum for input into the respective generic fraud detection trained sensor models. The creation of sub-sessions during the user session also enables a frequent assessment of the user behaviour during the user session to enable rapid fraud detection.

Detection result unit 230 combines the outputs of the separate models M1, M2 into one single detection result for the sub-session. The result may be communicated to online system 400 shown by arrow B2. The communication may include a command or alert to online system 400 to terminate the user session between user device 300 and online system 400.

FIG. 2 is a more detailed embodiment of fraud detection system 200 and method for use thereof, wherein keystrokes, mouse/touch actions and navigation actions are analysed.

The fraud detection system 200 comprises a communication interface 201 for receiving user action data UAD, here user action data K, MT, N, and, possibly, view change indications VCI indicating that user device 300 has been presented a new view V on its screen.

User action data K, MT, N are received at communication interface 201 in communication B1 and fed to data collection unit 210 comprising a database 211 for storing the user action data and data collector 212 that may perform some pre-processing to the user action data UAD if necessary.

In the embodiment of FIG. 2, data analysis unit 220 comprises units for feature engineering to obtain appropriate inputs for sensor-specific models M1, M2 and M3. Data analysis unit 220 provides a sensor input calculator 221K, 221MT and 221N for each type of user action data K, MT, N configured to calculate sensor input features for each type of user action. The calculation of the sensor specific input features provides more information (correlations, dependencies, etc.) specific to the type of user action about the user behaviour in comparison to the raw user action data as output by the user device 300.

The sensor input features obtained for each type of user action are subsequently input into aggregators AG1, AG2 and AG3 to provide a first aggregated input datum AGK relating to the keyboard user action on user device 300 for model M1, a second aggregated input datum AGMT relating to the mouse/touch user action on user device 300 into model M2 and a third aggregated input datum AGN relating to navigation user action on user device 300 for model M3 for a specific sub-session.

Data analysis unit 220 comprises a database 222 wherein sensor specific input features and/or aggregated input data may be stored. Database 222 may also store models M1, M2 and M3.

Different machine learning models can be trained for models M1, M2, M3 to distinguish between two types of classes: compliant versus compromised sub-sessions based on their characteristics. These models include Deep learning, Logistic Regression, Gradient Boosting Tree, Random Forest, and Support Vector Machine. Some other models are to group sub-sessions based on their characteristics into different clusters, without a predefined class type, such as K-Nearest Neighbors, DBSCAN, Spectral clustering, etc.

Data analysis unit 220 further comprises a sub-session controller 223 configured to perform tasks relating to sub-session processes. For example, sub-session controller 223 may determine start and/or termination of a sub-session, thereby controlling timing of the fraud detection system 200. Sub-session controller 223 may receive with communication B1 view change indication VCI representing changes of a view (e.g. changing of a web page or changing of a mobile app view) at the user device 300. Sub-session controller 223 may, for example, trigger aggregators AG1, AG2, AG3 to provide the aggregated data AGK, AGMT and AGN to the respective separate models M1, M2 and M3 or trigger sensor input calculators 221K, 221MT, 221N to use the user action data from database 211 to obtain sensor input features for aggregators AGK, AGMT and AGN. Sub-session controller 223 may also be configured to ensure that a sufficient amount of data (user action data and/or sensor specific features) is available for a sub-session as will be described in further detail with reference to FIG. 5.

In more detail, the feature engineering as shown in FIG. 2 is divided into two stages. The first stage involves the computation of sensor-specific behavioral features, computed for the three types of user action (keystroke K, mouse/touch MT, and navigation N) separately using sensor input calculators 221K, 221MT and 221N, examples of which are shown in in table 1.

**Table 1 Sensor-specific behavioural features**

| Sensor | Feature name | Feature description |
|---|---|---|
| Keystroke | Hold time | Time between pressing and releasing a key from the keyboard/keypad |
| | Press to press time | Time between pressing the current key and pressing the previous key time. |
| | Release to press time | Time between releasing the current key and pressing the previous key time. |
| | Press to release time | Time between pressing the current key and releasing the previous key time. |
| | Release to release time | Time between releasing the current key and releasing the previous key time. |
| Mouse/Touch | Linear velocity | Rate of change of a mouse pointer/touch position between two consecutive mouse events with respect to time |
| | Linear jerk | Rate of change of a mouse pointer/touch acceleration between two consecutive mouse events with respect to time |
| | Angular velocity | Rate of change of a mouse pointer/touch angle in relation to a fixed origin between two consecutive mouse/touch events with respect to time |
| | Angular acceleration | Rate of change of a mouse pointer/touch angular velocity in relation to a fixed origin between two consecutive mouse/touch events with respect to time |
| | Straightness | Ratio of the Euclidean distance between the starting and ending points of a mouse pointer/touch |
| | Typing speed | Ratio between the key count to the fill time per input filed |
| Navigation | Burst_time_ratio | Ratio between the total time spends in filling input field to the navigation duration. |
| | Navivgation_input_count_ratio | Ratio between the navigation duration to the replication of focus-in on input field in the same navigation. |
| | input flight time | Difference in time between the focus-in of the current input field and the focus-out of the previous input filed. |

In the second stage, aggregated sensor data are obtained using aggregators AG1, AG2 and AG3 combining the sensor-specific feature inputs on a sub-session level as illustrated in table 2. The aggregated sensor data can be classified into time domain and frequency domain. The time domain features comprise statistical measures, such as mean, median, variance, skewness, kurtosis, and percentiles. The frequency domain features relate to the sensor signal values with respect to its frequency. A signal can be converted from the time domain to the frequency domain using mathematical transformations like the Fourier transform. Data engineered from this type are for instance the power spectral density and entropy. The aggregated sensor data are calculated per sensor for each sub-session.

**Table 2: Aggregated sensor data**

| Datum type | Datum name | Datum description |
|---|---|---|
| Time domain | mean | The average of the aggregated feature per sensor per sub-session. |
| | median | The central density of the aggregated feature per sensor per sub-session. |
| | variance | The dispersion of the aggregated feature per sensor per sub-session. |
| | skewness | The asymmetry of the aggregated feature distribution per sensor per sub-session. |
| | kurtosis | The shape of tail of the aggregated feature distribution per sensor per sub-session. |
| | percentiles | The relative standing of a value (e.g. 25%, 75%, etc.) within the aggregated feature values per sensor per sub-session. |
| Frequency domain | entropy | The average amount of information in the aggregated feature values per sensor per sub-session. |
| | energy | The measure of total magnitude of the aggregated feature signal per sensor per sub-session. |

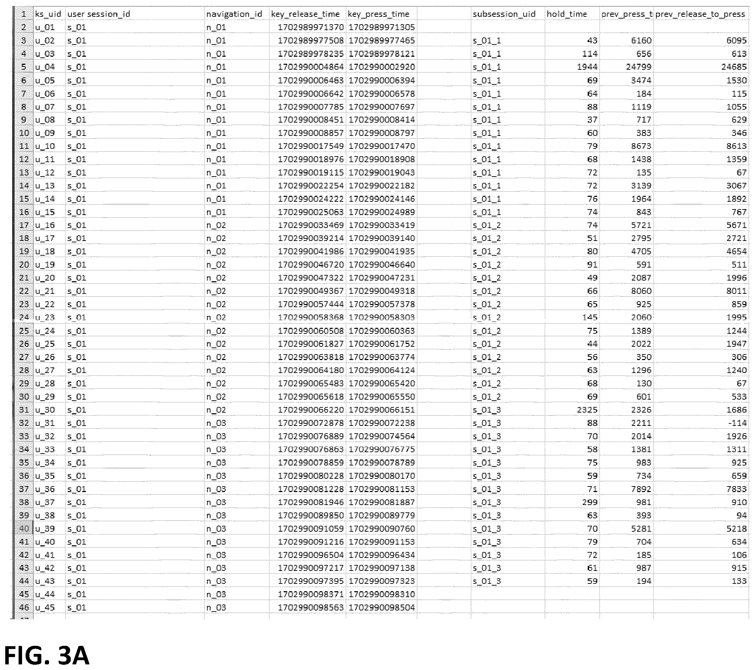

FIGS. 3A and 3B show some actual data for the diverse stages of feature engineering for three sub-sessions.

In FIG. 3A user action data of a particular user session (user session_id) are shown, in this case for the keystroke sensor. The keystroke data K include key release time and key press time. Sensor input features are calculated from these data, for example hold_time, prev_press-to-press times and prev. release-to-press times. Sub-session identifiers are also included.

FIG. 3B shows the aggregated keyboard sensor datum for each sub-session. The sensor input features are aggregated on sub-session basis and statistical features, such as 3^{rd} quantile, 98^{th} percentile, skewness and kurtosis in this example of FIG. 3B, are calculated.

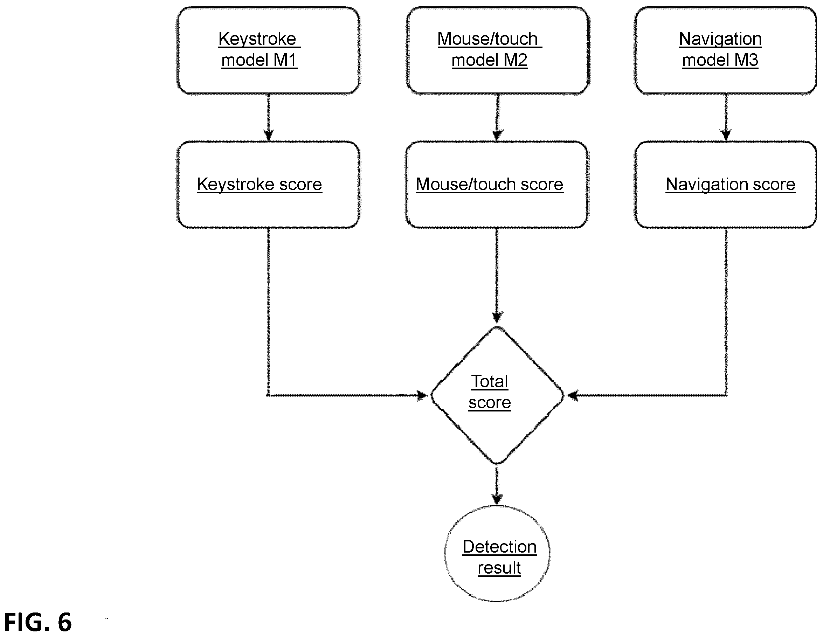

Detection result unit 230 may include a combiner unit 231 to provide a detection result for the sub-session by combining at least a first output of the first generic fraud detection trained sensor model M1 relating to the first type of user action, here keyboard action on user device 300 for a sub-session, a second output of the second generic fraud detection trained sensor model M2 relating to the second type of user action, here mouse/touch action, for the sub-session and a third output of the third generic fraud detection trained sensor model M3 relating to the third type of user action, here navigation action, for the sub-session. This facilitates using distinct sensor-specific models while having a single detection result for every sub-session. An embodiment of this combination process will be further described with reference to FIG. 6. The detection result and/or the outputs of each trained model M1, M2, M3, per sub-session for a particular user device may be stored in database 232.

In the embodiment of FIG. 2, detection result unit 230 may be configured to terminate or trigger termination by means of alert AL of the user session between user device 300 and online system 400, as is shown by communication B2(AL) if the output of combiner 231 identifies the user of user device 300 as a fraudster.

The fraud detection system 200 comprises a training module 240 using input from online system 400 (shown by the dashed arrow) enabling the models M1, M2 and M3 to distinguish between compliant and fraudulent behaviour based on historical data on fraudulent and compliant behaviour. Training module 240 may use data collection unit 210 to obtain data from database 420 of online system 400 that is subsequently input into data analysis unit 220 to obtained labelled sensor specific features and/or aggregated sensor data and may be stored in database 222. The outcomes of the training process are three separately trained models M1, M2 and M3, viz. a generic model per sensor (keystroke, mouse/touch, and navigation). These three generic models have been built based on the overall fraudsters' behavior and are used to detect fraudulent behavior for new user sessions.

In one embodiment, the fraud detection system 200 and online system 400 may operate as follows.

A user connects to a mobile/web banking system 400 via his user device 300, such as a personal computer, laptop, or other mobile device (smart phone, tablet computer). The user explores the web site or the mobile banking application via an I/O interface on his device, which may be a mouse, keyboard, touch, or a combination of them. For security and verification purposes, all the user actions via the I/O interface are communicated through the network NW to the banking system 400.

Data collection unit 210 receives user action data for keystroke, mouse/touch, and navigation via a software development kit and saves these data into a database 211. Sub-sessions are used to generate sophisticated features and then saved into a database 222. The data analysis unit 220 obtains, per type of user action, two inputs, the sub-session advanced features from aggregators AG1, AG2 and AG3 and the pretrained models M1, M2, M3 to detect whether the sub-session exhibits fraudulent behavior or is considered compliant by assigning a risk score using detection result unit 230.

FIG. 4 is an exemplary embodiment of a user session US of a user device 300 with an online system 400 during which a sequence of views V1-V5 is presented on the user device 300. Views V1-V5 may comprise different web pages presented to a user device 300, such as a personal computer, a laptop computer or a tablet computer, during user session US. Views V1-V5 may, alternatively, correspond to mobile application views, presented on a mobile device 300, such as a smart phone or tablet computer. The sequence of views V1-V5 may be determined by the online system 400 for a particular interaction with the user device 300 during the user session US.

During the user session US, the user device 300 proceeds through the sequence of views V1, V2, V3, V4 and V5. View V1 may, for example be an introduction or logon view to the online system 400, view V2 a status view for the user (e.g. the current financial position of the user's bank account(s)), views V3 and V4 views wherein the user inputs data for a certain instruction to the online system 400 (e.g. money transfer) and view V5 a confirmation view (e.g. view presenting the instructions of the user as recorded by the online system 400 to be confirmed by the user on this view). Each time a new view is presented on the user device 300, the fraud detection system 200 may detect that a previous sub-session is terminated, and a new sub-session begins, for example by receiving a view change indication VCI, as shown in the exemplary embodiment of FIG. 2. Hence, in the embodiment of FIG. 4, each view V presented on the user device 300, or the start of user action on that view, corresponds to a sub-session SS in the fraud detection system 200. The sub-sessions SS1, SS2, SS3, SS4 and SS5 are indicated in FIG. 4 and the dotted lines indicate the boundaries between these sub-sessions as an example. The first sub-session SS1 starts when the first view V1 is presented to the user device 300 or when the user starts a user action on the view V1.

The sub-session embodiment is user activity-driven and enables calculation of multiple fraud scores and detection results based on a user's interactions with the online system 400. During the user session US, it may be evaluated continuously if the user session becomes compromised at some point during the online session. Consequently, the sub-session embodiment enables tracking user activities throughout the user session US. Throughout the user session, keystrokes, mouse/touch events and other events may be collected as the user performs actions on the view. At the end of the actions on the view, when the user changes to another page, for example, the sub-session is terminated.

In order to obtain aggregated sensor data of sufficient quality for input into the sensor-specific models M1, M2, M3, the amount of user action data (e.g. the number of keystrokes, mouse/touch inputs and/or navigation actions) must be sufficient. FIG. 5 is a schematic illustration of how this can be achieved for the embodiment of FIG. 1 with two sensors, for example keystrokes represented by key stroke data K and mouse/touch actions represented by mouse/touch data MT. The skilled person will appreciate that a corresponding approach applies to the embodiment of FIG. 2.

The fraud detection system 200 may be configured to provide at least one first aggregated sensor datum for mouse/touch actions for a current sub-session SS3, for example, of the plurality of sub-sessions SS1-SS5 based in part on mouse/touch action data MT, for example, received during at least one previous sub-session SS2 and/or SS1. The embodiment enables the fraud detection system 200 to borrow previously obtained user action data for a specific type of user action during one or more previous sub-sessions to provide the at least one aggregated sensor datum of sufficient quality for that sensor-specific model. As an example, mouse/touch action by the user on user device 300 during sub-session SS3 may be insufficient to provide a sufficient number of mouse/touch data MT to provide an aggregated mouse sensor datum AGMT as input for the mouse/touch action specific model M2, so that mouse/touch data MT from one or more previous sub-sessions SS2, SS1 may be borrowed to provide the aggregated mouse sensor datum AGMT. The fraud detection system 200 may therefore be configured to store, at least temporarily, user action data from previous sub-sessions, SS2 and/or SS1 in this example, so that the mouse/touch action data MT remain available for one or more future sub-session(s), such as current sub-session SS3.

In the embodiment of FIG. 2, database 211 may store the user action data and sub-session controller 223 may determine whether sufficient user action data are available based on comparison with a threshold, as will be explained below. The fraud detection system 200 may, alternatively or in addition, store the processed user action data, such as the sensor input features mentioned above, in database 222 for the purpose of using this data of one or more previous sub-sessions SS to complete an input dataset for aggregation in the user action specific aggregators for a particular current sub-session.

Since the fraud detection system 200 applies separate sensor-specific models M1, M2, M3 for each type of user action data UAD, an insufficient amount user action data may be available to apply one or more of the models, such as for the mouse/touch data MT described above for sub-session SS3. The fraud detection system 200 may be configured to provide the at least one second aggregated sensor datum, for example AGK, for the current sub-session SS3 based only on the keystroke data K obtained during the current sub-session SS3. In other words, while for a given sub-session SS3, insufficient user action data, here mouse/touch action data MT, may have been obtained to provide one aggregated sensor datum, here AGMT, for one corresponding sensor-specific model, here model M2, the same sub-session SS3 may have sufficient user action data to provide another one of the aggregated sensor datum for another one of the sensor-specific models, such as keystroke data K related model M1. As an example, while there is a lack of mouse action data MT as described above for sub-session SS3, there may be a sufficient number of keystroke data K to provide the aggregated keystroke datum AGK for the same sub-session SS3 for the keystroke action specific model M1.

As a numeric example, FIG. 5 indicates the number of keystroke action data K and the number of mouse/touch action data MT in the circles in the lower-left part of each of the views V1-V5 as collected for user actions on user device 300 for each of these views V1-V5. For example, for view V1, fraud detection system 200 collects 13 samples of keystroke action data K and 7 samples of mouse/touch action data MT. Likewise, for view V2 15 samples of keystroke action data K and 12 samples of mouse/touch action data MT are collected, etc. In the embodiment of FIG. 2, these user action data UAD may be stored in database 211 for each sub-session SS.

The fraud detection system 200 may be configured to apply at least one first threshold to determine whether the user action data UAD of at least one previous sub-session SS should be obtained as described above. The first threshold provides a setting to define the sufficient amount of user action data UAD for a given sub-session SS. The first threshold may be defined for a specific type of user action (for example, one threshold may be set for keystroke data K and another, possibly different, one for the mouse/touch data MT). The first threshold may be determined to enable the provision of an aggregated sensor datum, such as AGMT, of sufficient quality.

In the example of FIG. 5, it is shown that the fraud detection system 200 receives 4 samples of mouse/touch data MT for view V3 (sub-session SS3). For this embodiment, the threshold for the amount of keystroke data K may be set to 10 and the threshold for the amount of mouse/touch data MT may be set to 8. Since the number of samples of mouse/touch data MT for sub-session SS3 is beneath the set threshold for mouse/touch data for view V3, fraud detection system 200 (for example using sub-session controller 223) may take at least four samples of mouse/touch action data MT stored in database 211 for the previous view V2 (sub-session SS2) before starting to provide the aggregated mouse/touch data AGMT for view V3 (possibly after generating sensor specific features using 221MT as described with reference to FIG. 2). It is noted that, for the same view V3 (sub-session SS3), the number of samples for keystroke data K (here: 12) meets the set threshold for keystroke data, so that the aggregated keystroke data AGK is calculated only based on keystroke data K (possibly after generating sensor specific features using 221K as described with reference to FIG. 2) collected for view V3 itself.

Furthermore, it is shown that the number of mouse/touch action data MT in view V1 (sub-session SS1) is also below the threshold of 8 set for mouse/touch action data MT. Since there are no previous sub-sessions SS prior to sub-session SS1, the aggregated mouse/touch datum AGMT is provided using the number of mouse/touch action data samples below the threshold. The inventors have considered that such cases would mainly occur when starting the user session US, while fraud is typically observed deeper into the user session US, i.e. after a first number of views has passed.

In one embodiment, the fraud detection system 200 may be configured to apply at least one second threshold to determine whether an aggregated sensor datum should be provided at all, i.e. whether or not the trained model should be applied for that sensor. This second threshold provides a setting to define whether it is useful to apply a sensor specific model for a particular sub-session SS. The second threshold may be defined for a specific sensor (for example, one threshold may be set for keystroke data K and another, possibly different, one for the mouse/touch action data MT).

For example, in FIG. 5, the number of keystroke action data K for view V5 (sub-session SS5) is only 1. If the minimum threshold is set to 2 for keystroke data K, the fraud detection system 200 may decide to not provide the aggregated keystroke datum AGK for this sub-session SS5 to model M1 so that no result for this specific sensor model M1 is obtained for sub-session SS5. The detection results, as will now be discussed with reference to FIG. 6, may then be based on the aggregated keystroke datum AGK fed to model M1 for the previous view V4 (i.e. sub-session SS4)

FIG. 6 is an exemplary embodiment of combining outputs of distinct models M1, M2 and M3 in FIG. 2 for different types of user actions for a view to obtain an overall detection result for a sub-session SS. As explained with reference to FIG. 2, the fraud detection system 200 may include a combiner unit 231 to provide a detection result for the sub-session SS by combining at least a first output of the first generic fraud detection trained sensor model M1 relating to the first type of user action, here keystroke action on user device 300 during a sub-session, a second output of the second generic fraud detection trained sensor model M2 relating to the second type of user action, here mouse/touch action, during the sub-session and a third output of the third generic fraud detection trained sensor model M3 relating to the third type of user action, here navigation action, during the sub-session.

FIG. 6 shows that the output of each model M1, M2 and M3 provides a user-action specific score that is combined into a total score. In the models, the aggregated user action data is classified against the trained generic model which results in a sensor specific score. In other words, risk scores are generated separately for each one of the three models M1, M2, M3, one per sensor, based on how likely the characteristics of the sub-session per sensor indicates a compromised sub-session. The three scores are then merged into a total score. Multiple approaches can be used such as the simple averaging, weighted mean, or using a machine learning model, such as a stacking classifier or using another machine learning model. The final conclusion for the sub-session results in a detection result which may terminate or trigger termination of the user session US. Database 232 may be used to store the results and/or the predicted scores.

The disclosed approach focuses on finding footprints of fraudsters in online applications. Real historical transactional data are acquired from the online system (e.g., a bank). The data has been generated, but not limited, to users' exploration and usage of views associated with the online system comprising keystrokes, mouse/touch dynamics, and navigation details. The user sessions are pre-labeled as fraud or non-fraud.

The primary focus in this approach revolves around behavioral biometrics of fraudsters' patterns throughout their user session on micro level rather than focusing on the individual user's behavioral biometric patterns and deviations. Each user session may be divided into multiple sub-sessions based on the user activities. These activities are related to, but not limited, keystrokes, mouse/touch dynamics, and navigation patterns. The purpose behind creating these sub-sessions is to gather more insight related to the fraudster's behavior and to identify the fraudulent activity at the earliest stage of a user session.

For each sub-session, the sensor raw data (keystroke, mouse/touch, navigation data) has been utilized to derive advanced aggregated sensor features, for example in time and frequency domains. This sensors data and sensor-related features are collected and engineered separately per sensor to train one generic model per sensor.

The generic fraud detection approach may comprise two stages for each sensor. The first stage is the training phase, where a binary classifier model is trained to distinguish between fraudsters and non-fraudsters at the sub-session level using sophisticated features. The second stage is the identification phase, where features are generated from previously unseen session data, either from a new user or an existing user. The trained models are then employed to determine whether these sub-sessions exhibit signs of a fraud or not.

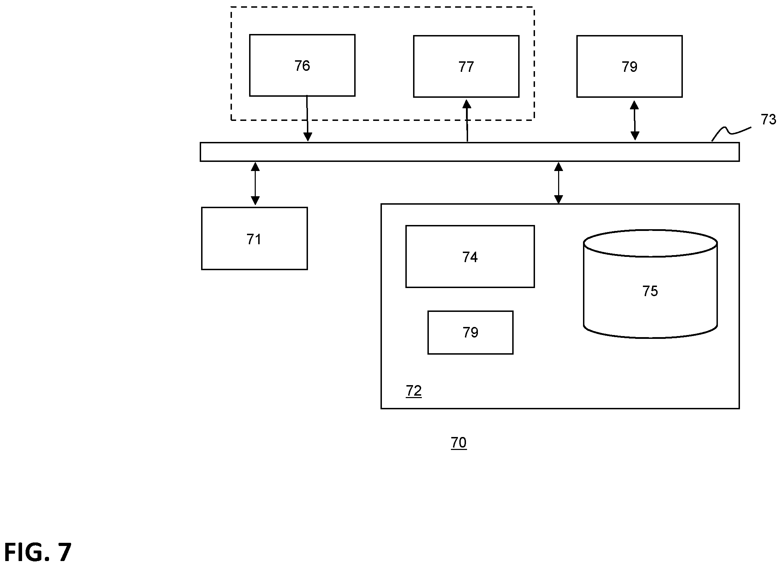

FIG. 7 depicts a block diagram illustrating an exemplary processing system according to a disclosed embodiment, e.g. a (part of a) fraud detection system 200, user device 300 and/or online system 400 as described above for use in the fraud detection method as described above. As shown in FIG. 7, the processing system 70 may include at least one processor 71 coupled to memory elements 72 through a system bus 73. As such, the processing system may store program code within memory elements 72. Further, the processor 71 may execute the program code accessed from the memory elements 72 via a system bus 73. In one aspect, the processing system may be implemented as a computer system that is suitable for storing and/or executing program code. It should be appreciated, however, that the processing system 70 may be implemented in the form of any system including a processor and a memory that is capable of performing the functions described within this specification.

The memory elements 72 may include one or more physical memory devices such as, for example, local memory 74 and one or more bulk storage devices 75. The local memory may refer to random access memory or other non-persistent memory device(s) generally used during actual execution of the program code. A bulk storage device may be implemented as a hard drive or other persistent data storage device. The processing system 70 may also include one or more cache memories (not shown) that provide temporary storage of at least some program code in order to reduce the number of times program code must be retrieved from the bulk storage device 75 during execution.

Input/output (I/O) devices depicted as an input device 76 and an output device 77 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 7 with a dashed line surrounding the input device 76 and the output device 77). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 78 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 70, and a data transmitter for transmitting data from the processing system 70 to said systems, devices and/or networks. Modems, cable modems, and Ethernet cards are examples of different types of network adapter that may be used with the processing system 70.

As pictured in FIG. 7, the memory elements 72 may store an application 79. In various embodiments, the application 79 may be stored in the local memory 74, the one or more bulk storage devices 75, or apart from the local memory and the bulk storage devices. It should be appreciated that the processing system 70 may further execute an operating system (not shown in FIG. 7) that can facilitate execution of the application 79. The application 79, being implemented in the form of executable program code, can be executed by the processing system 70, e.g., by the processor 71. Responsive to executing the application, the processing system 70 may be configured to perform one or more operations or method steps described herein.

In one aspect of the present invention, one or more components of the base station selection support system and/or user device for use with such a base station selection support system. as disclosed herein may represent processing system 70 as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 71 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A fraud detection system (200) configured to detect fraudulent user behaviour on views (V) during a user session (US) of a user device (300) with an online system (400) presenting the views to the user device, each view of the views corresponding to a sub-session of a plurality of sub-sessions of the user session, wherein the fraud detection system comprises at least:
a first generic fraud detection trained sensor model (M1) relating to a first type of user action on the views;
a second generic fraud detection trained sensor model (M2) relating to a second type of user action on the views;
wherein
the fraud detection system is further configured to obtain and process first user action data from the user device corresponding to the first type of user action for a view of the views and second user action data corresponding to the second type of user action for the view of the views;
**and characterized by**
a first aggregator (AG1) configured to aggregate the obtained and processed first user action data on a per view basis to obtain at least one aggregated first sensor datum and to provide the at least one aggregated first sensor datum from the processed first user action data for the view for input into the first generic fraud detection trained sensor model (M1), and
a second aggregator (AG2) configured to aggregate the obtained and processed second user action data on a per view basis to obtain at least one aggregated second sensor datum and to provide the at least one aggregated second sensor datum from the processed second user action data for the view for input into the second generic fraud detection trained sensor model (M2).

2. The fraud detection system (200) according to claim 1, wherein the fraud detection system is configured to process the user action data by calculating first sensor input features from the user action data corresponding to the first type of user action for input into the first aggregator (AG1) and second sensor input features from the user action data corresponding to the second type of user action for input into the second aggregator (AG2).

3. The fraud detection system (200) according to claim 1, wherein the fraud detection system is configured to terminate the sub-session upon receiving a view change indication (VCI).

4. The fraud detection system (200) according to one or more of the preceding claims, wherein the fraud detection system is configured to calculate the at least one first aggregated sensor datum for a current sub-session of the plurality of sub-sessions using in the first user action data obtained during at least one previous sub-session.

5. The fraud detection system (200) according to claim 4, wherein the fraud detection system is configured to calculate the at least one second aggregated sensor datum for the current sub-session of the plurality of sub-sessions using only the second user action data obtained during the current sub-session.

6. The fraud detection system (200) according to one or more of the preceding claims, wherein the fraud detection system is configured to apply at least one of:
at least one first threshold to determine whether first user action data of the at least one previous sub-session according to claim 4 should be used to provide the first aggregated sensor datum, wherein, optionally, the first threshold is specific for the type of user action; and
at least one second threshold to determine whether the at least one first aggregated sensor datum should be provided, wherein, optionally, the second threshold is specific for the type of user action.

7. The fraud detection system (200) according to one or more of the preceding claims, wherein the fraud detection system is configured to provide a detection result for the sub-session by combining at least a first output of the first generic fraud detection trained sensor model (M1) relating to the first type of user action on a view and a second output of the second generic fraud detection trained sensor model (M2) relating to the second type of user action on the view.

8. The fraud detection system (200) according to one or more of the preceding claims, wherein the fraud detection system is configured to obtain and process third user action data corresponding to a third type of user action, and wherein the fraud detection system further comprises
a third generic fraud detection trained sensor model (M3) relating to a third type of user action on the view of the views;
a third aggregator (AG3) configured aggregate obtained and process third user action data on a per view basis to obtain at least one third aggregated sensor datum and to provide the at least one aggregated third sensor datum from the processed third user action data for input into the third generic fraud detection trained sensor model.

9. The fraud detection system (200) according to claim 8, wherein the fraud detection system is configured to provide a detection result for the sub-session by combining at least a first output of the first generic fraud detection trained sensor model (M1) relating to the first type of user action on a view, a second output of the second generic fraud detection trained sensor model (M2) relating to the second type of user action on the view and a third output of the third generic fraud detection trained sensor model (M3) relating to the third type of user action on the view.

10. The fraud detection system (200) according to claims 7 or 9, wherein the fraud detection system is configured to terminate or trigger termination of the user session of the user device (300) with the online system (400) dependent on the detection result.

11. The fraud detection system (200) according to one or more of the preceding claims, wherein at least one of the following applies:
- the user action data relating to the first type of user action relates to one of keystroke data, mouse/touch input data and navigation data of the user device and the user action data relating to the second type of user action relates to another one of keystroke data, mouse/touch input data and navigation data, wherein, optionally in case of claim 8, the third user action data relating to the third type of user action relates to a third one of keystroke data, at mouse/touch input data and navigation data of the user device.
- at least one of the at least one first aggregated sensor datum and the at least one second aggregated sensor datum is an aggregated sensor datum in the frequency domain, such as at least one of entropy and energy of the user action data corresponding to at least the first and second type of user action.
- at least one of the at least one first aggregated sensor datum and the at least one second aggregated sensor datum is an aggregated sensor datum in the time domain, such as at least one of variance, skewness, kurtosis and percentile of the user action data corresponding to at least the first and second type of user action.

12. A fraud detection method in a fraud detection system (200) for detecting fraudulent user behaviour on views (V) during a user session (US) of a user device (300) with an online system (400) presenting the views to the user device, each view of the views corresponding to a sub-session of a plurality of sub-sessions of the user session, wherein the fraud detection system comprises at least
a first generic fraud detection trained sensor model (M1) relating to a first type of user action on a view of the views;
a second generic fraud detection trained sensor model (M2) relating to a second type of user action on the view of the views;
wherein the method comprises the steps of
obtaining and processing first user action data from the user device corresponding to the first type of user action and second user action data corresponding to the second type of user action;
wherein the method is further **characterized by** the steps of
aggregating the obtained and processed first user action data on a per view basis to obtain at least one aggregated first sensor datum and providing the at least one aggregated first sensor datum from the processed first user action data for input into the first generic fraud detection trained sensor model (M1), and
aggregating the obtained and processed second user action data on a per view basis to obtain at least one aggregated second sensor datum and providing the at least one aggregated second sensor datum from the processed second user action data for input into the second generic fraud detection trained sensor model (M2).

13. The method according to claim 12, further comprising the steps of operating the fraud detection system (200) as defined in one or more of the claim 2-11.

14. A computer program product or suite of computer programs comprising one or more software code portions configured to, when run on one or more computer systems, to perform the steps of the method according to claim 12 or 13.

15. A combination of an online system (400) and the fraud detection system (200) as defined in one or more of the claims 1-11, wherein the online system is configured to receive the first user action data and second user action data from the user device (300) and to send the first user action data and second user action data, or samples or derivatives thereof, to the fraud detection system (200).

## Patentansprüche

1. Betrugserkennungssystem (200), konfiguriert zum Erkennen betrügerischen Nutzerverhaltens auf Ansichten (V) während einer Nutzersitzung (US) eines Benutzergeräts (300) mit einem Online-System (400), das die Ansichten dem Benutzergerät präsentiert, wobei jede Ansicht der Ansichten einer Untersitzung einer Vielzahl von Untersitzungen der Nutzersitzung entspricht, wobei das Betrugserkennungssystem zumindest umfasst:
ein erstes generisches, zur Betrugserkennung trainiertes Sensormodell (M1), das sich auf einen ersten Typ von Nutzeraktion auf den Ansichten bezieht;
ein zweites generisches, zur Betrugserkennung trainiertes Sensormodell (M2), das sich auf einen zweiten Typ von Nutzeraktion auf den Ansichten bezieht;
wobei
das Betrugserkennungssystem ferner konfiguriert ist, erste Nutzeraktionsdaten vom Benutzergerät zu erhalten und zu verarbeiten, die einem ersten Typ von Nutzeraktion für eine Ansicht der Ansichten entsprechen, und zweite Nutzeraktionsdaten zu erhalten und zu verarbeiten, die einem zweiten Typ von Nutzeraktion für die Ansicht der Ansichten entsprechen;
und **gekennzeichnet durch**
einen ersten Aggregator (AG1), konfiguriert zum Aggregieren der erhaltenen und verarbeiteten ersten Nutzeraktionsdaten auf Basis pro Ansicht, um zumindest ein aggregiertes erstes Sensordatum zu erhalten, und zum Bereitstellen des zumindest einen aggregierten ersten Sensordatums aus den verarbeiteten ersten Nutzeraktionsdaten für die Ansicht zur Eingabe in das erste generische, zur Betrugserkennung trainierte Sensormodell (M1), und
einen zweiten Aggregator (AG2), konfiguriert zum Aggregieren der erhaltenen und verarbeiteten zweiten Nutzeraktionsdaten auf Basis pro Ansicht, um zumindest ein aggregiertes zweites Sensordatum zu erhalten, und zum Bereitstellen des zumindest einen aggregierten zweiten Sensordatums aus den verarbeiteten zweiten Nutzeraktionsdaten für die Ansicht zur Eingabe in das zweite generische, zur Betrugserkennung trainierte Sensormodell (M2).

2. Betrugserkennungssystem (200) nach Anspruch 1, wobei das Betrugserkennungssystem konfiguriert ist, die Nutzeraktionsdaten durch Berechnen erster Sensor-Eingangsmerkmale aus den Nutzeraktionsdaten, die dem ersten Typ von Nutzeraktion entsprechen, zur Eingabe in den ersten Aggregator (AG1), und zweiter Sensor-Eingangsmerkmale aus den Nutzeraktionsdaten, die dem zweiten Typ von Nutzeraktion entsprechen, zur Eingabe in den zweiten Aggregator (AG2), zu verarbeiten.

3. Betrugserkennungssystem (200) nach Anspruch 1, wobei das Betrugserkennungssystem konfiguriert ist, die Untersitzung zu beenden, wenn eine Ansicht-Wechsel-Anzeige (VCI) empfangen wird.

4. Betrugserkennungssystem (200) nach einem oder mehreren der vorhergehenden Ansprüche, wobei das Betrugserkennungssystem konfiguriert ist, das zumindest eine erste aggregierte Sensordatum für eine aktuelle Untersitzung der Vielzahl von Untersitzungen unter Verwendung der ersten Nutzeraktionsdaten zu berechnen, die während zumindest einer vorherigen Untersitzung erhalten wurden.

5. Betrugserkennungssystem (200) nach Anspruch 4, wobei das Betrugserkennungssystem konfiguriert ist, das zumindest eine zweite aggregierte Sensordatum für die aktuelle Untersitzung der Vielzahl von Untersitzungen ausschließlich unter Verwendung der zweiten Nutzeraktionsdaten zu berechnen, die während der aktuellen Untersitzung erhalten wurden.

6. Betrugserkennungssystem (200) nach einem oder mehreren der vorhergehenden Ansprüche, wobei das Betrugserkennungssystem konfiguriert ist, zumindest eines der folgenden anzuwenden:
zumindest einen ersten Schwellenwert, um zu bestimmen, ob erste Nutzeraktionsdaten der zumindest einen vorherigen Untersitzung gemäß Anspruch 4 zur Bereitstellung des ersten aggregierten Sensordatums verwendet werden sollen, wobei der erste Schwellenwert optional spezifisch für den Typ der Nutzeraktion ist; und
zumindest einen zweiten Schwellenwert, um zu bestimmen, ob das zumindest eine erste aggregierte Sensordatum bereitgestellt werden soll, wobei der zweite Schwellenwert optional spezifisch für den Typ der Nutzeraktion ist.

7. Betrugserkennungssystem (200) nach einem oder mehreren der vorhergehenden Ansprüche, wobei das Betrugserkennungssystem konfiguriert ist, ein Erkennungsergebnis für die Untersitzung bereitzustellen, indem zumindest eine erste Ausgabe des ersten generischen, zur Betrugserkennung trainierten Sensormodells (M1), die sich auf den ersten Typ von Nutzeraktion auf einer Ansicht bezieht, und eine zweite Ausgabe des zweiten generischen, zur Betrugserkennung trainierten Sensormodells (M2), die sich auf den zweiten Typ von Nutzeraktion auf der Ansicht bezieht, kombiniert werden.

8. Betrugserkennungssystem (200) nach einem oder mehreren der vorhergehenden Ansprüche, wobei das Betrugserkennungssystem konfiguriert ist, dritte Nutzeraktionsdaten zu erhalten und zu verarbeiten, die einem dritten Typ von Nutzeraktion entsprechen, und wobei das Betrugserkennungssystem ferner umfasst:
ein drittes generisches, zur Betrugserkennung trainiertes Sensormodell (M3), das sich auf einen dritten Typ von Nutzeraktion auf der Ansicht der Ansichten bezieht;
einen dritten Aggregator (AG3), konfiguriert zum Aggregieren erhaltener und verarbeiteter dritter Nutzeraktionsdaten auf Basis pro Ansicht, um zumindest ein drittes aggregiertes Sensordatum zu erhalten, und zum Bereitstellen des zumindest einen aggregierten dritten Sensordatums aus den verarbeiteten dritten Nutzeraktionsdaten zur Eingabe in das dritte generische, zur Betrugserkennung trainierte Sensormodell.

9. Betrugserkennungssystem (200) nach Anspruch 8, wobei das Betrugserkennungssystem konfiguriert ist, ein Erkennungsergebnis für die Untersitzung bereitzustellen, indem zumindest eine erste Ausgabe des ersten generischen, zur Betrugserkennung trainierten Sensormodells (M1), eine zweite Ausgabe des zweiten generischen, zur Betrugserkennung trainierten Sensormodells (M2) und eine dritte Ausgabe des dritten generischen, zur Betrugserkennung trainierten Sensormodells (M3) kombiniert werden.

10. Betrugserkennungssystem (200) nach Anspruch 7 oder 9, wobei das Betrugserkennungssystem konfiguriert ist, die Nutzersitzung des Benutzergeräts (300) mit dem Online-System (400) abhängig vom Erkennungsergebnis zu beenden oder deren Beendigung auszulösen.

11. Betrugserkennungssystem (200) nach einem oder mehreren der vorhergehenden Ansprüche, wobei zumindest eines der Folgenden zutrifft:
die Nutzeraktionsdaten, die sich auf den ersten Typ von Nutzeraktion beziehen, beziehen sich auf einen der folgenden Punkte: Tastenanschlagsdaten, Maus-/Touch-Eingabedaten und Navigationsdaten des Benutzergeräts; und die Nutzeraktionsdaten, die sich auf den zweiten Typ von Nutzeraktion beziehen, beziehen sich auf einen anderen der Tastenanschlagsdaten, Maus-/Touch-Eingabedaten und Navigationsdaten; wobei optional im Fall von Anspruch 8 die dritten Nutzeraktionsdaten sich auf einen dritten der Tastenanschlagsdaten, Maus-/Touch-Eingabedaten und Navigationsdaten des Benutzergeräts beziehen;
zumindest eines des zumindest einen ersten aggregierten Sensordatums und des zumindest einen zweiten aggregierten Sensordatums ist ein aggregiertes Sensordatum im Frequenzbereich, wie zumindest eines von Entropie und Energie der Nutzeraktionsdaten, die zumindest dem ersten und zweiten Typ von Nutzeraktion entsprechen;
zumindest eines des zumindest einen ersten aggregierten Sensordatums und des zumindest einen zweiten aggregierten Sensordatums ist ein aggregiertes Sensordatum im Zeitbereich, wie zumindest eines von Varianz, Schiefe, Kurtosis und Perzentil der Nutzeraktionsdaten, die zumindest dem ersten und zweiten Typ von Nutzeraktion entsprechen.

12. Betrugserkennungsverfahren in einem Betrugserkennungssystem (200) zum Erkennen betrügerischen Nutzerverhaltens auf Ansichten (V) während einer Nutzersitzung (US) eines Benutzergeräts (300) mit einem Online-System (400), das die Ansichten dem Benutzergerät präsentiert, wobei jede Ansicht der Ansichten einer Untersitzung einer Vielzahl von Untersitzungen der Nutzersitzung entspricht, wobei das Betrugserkennungssystem zumindest umfasst:
ein erstes generisches, zur Betrugserkennung trainiertes Sensormodell (M1), das sich auf einen ersten Typ von Nutzeraktion auf einer Ansicht der Ansichten bezieht;
ein zweites generisches, zur Betrugserkennung trainiertes Sensormodell (M2), das sich auf einen zweiten Typ von Nutzeraktion auf der Ansicht der Ansichten bezieht;
wobei das Verfahren die Schritte umfasst
Erhalten und Verarbeiten erster Nutzeraktionsdaten vom Benutzergerät, die dem ersten Typ von Nutzeraktion entsprechen, und zweiter Nutzeraktionsdaten, die dem zweiten Typ von Nutzeraktion entsprechen;
wobei das Verfahren ferner **gekennzeichnet ist durch** die Schritte
Aggregieren der erhaltenen und verarbeiteten ersten Nutzeraktionsdaten auf Basis pro Ansicht, um zumindest ein aggregiertes erstes Sensordatum zu erhalten, und Bereitstellen des zumindest einen aggregierten ersten Sensordatums aus den verarbeiteten ersten Nutzeraktionsdaten zur Eingabe in das erste generische, zur Betrugserkennung trainierte Sensormodell (M1), und
Aggregieren der erhaltenen und verarbeiteten zweiten Nutzeraktionsdaten auf Basis pro Ansicht, um zumindest ein aggregiertes zweites Sensordatum zu erhalten, und Bereitstellen des zumindest einen aggregierten zweiten Sensordatums aus den verarbeiteten zweiten Nutzeraktionsdaten zur Eingabe in das zweite generische, zur Betrugserkennung trainierte Sensormodell (M2).

13. Verfahren nach Anspruch 12, wobei das Verfahren ferner die Schritte umfasst, das Betrugserkennungssystem (200) gemäß einem oder mehreren der Ansprüche 2-11 zu betreiben.

14. Computerprogrammprodukt oder Suite von Computerprogrammen, umfassend eine oder mehrere Software-Code-Teile, konfiguriert zum Ausführen der Schritte des Verfahrens nach Anspruch 12 oder 13, wenn sie auf einem oder mehreren Computersystemen ausgeführt werden.

15. Kombination aus einem Online-System (400) und dem Betrugserkennungssystem (200) gemäß einem oder mehreren der Ansprüche 1-11, wobei das Online-System konfiguriert ist, die ersten Nutzeraktionsdaten und zweiten Nutzeraktionsdaten vom Benutzergerät (300) zu empfangen und die ersten Nutzeraktionsdaten und zweiten Nutzeraktionsdaten oder Stichproben oder Derivate davon an das Betrugserkennungssystem (200) zu senden.

## Revendications

1. Système de détection de fraude (200) configuré pour détecter un comportement d'utilisateur frauduleux sur des vues (V) pendant une session utilisateur (US) d'un dispositif utilisateur (300) avec un système en ligne (400) présentant les vues au dispositif utilisateur, chaque vue parmi les vues correspondant à une sous-session parmi une pluralité de sous-sessions de la session utilisateur, dans lequel le système de détection de fraude comprend au moins :
un premier modèle de capteur entraîné de détection de fraude générique (M1) concernant un premier type d'action d'utilisateur sur les vues ;
un deuxième modèle de capteur entraîné de détection de fraude générique (M2) concernant un deuxième type d'action d'utilisateur sur les vues ;
dans lequel
le système de détection de fraude est en outre configuré pour obtenir et traiter des premières données d'action d'utilisateur provenant du dispositif utilisateur correspondant au premier type d'action d'utilisateur pour une vue parmi les vues et des deuxièmes données d'action d'utilisateur correspondant au deuxième type d'action utilisateur pour la vue parmi les vues ;
**et caractérisé par**
un premier agrégateur (AG1) configuré pour agréger les premières données d'action d'utilisateur obtenues et traitées sur une base par vue afin d'obtenir au moins une première donnée de capteur agrégée et de fournir au moins une première donnée de capteur agrégée à partir des premières données d'action d'utilisateur traitées pour la vue pour une entrée dans le premier modèle de capteur entraîné de détection de fraude générique (M1), et
un deuxième agrégateur (AG2) configuré pour agréger les deuxièmes données d'action d'utilisateur obtenues et traitées sur une base par vue afin d'obtenir au moins une deuxième donnée de capteur agrégée et de fournir l'au moins une deuxième donnée de capteur agrégée à partir des deuxièmes données d'action d'utilisateur traitées pour la vue pour une entrée dans le deuxième modèle de capteur entraîné de détection de fraude générique (M2).

2. Système de détection de fraude (200) selon la revendication 1, dans lequel le système de détection de fraude est configuré pour traiter les données d'action d'utilisateur en calculant des premières caractéristiques d'entrée de capteur à partir des données d'action d'utilisateur correspondant au premier type d'action d'utilisateur pour une entrée dans le premier agrégateur (AG1) et des deuxièmes caractéristiques d'entrée de capteur à partir des données d'action d'utilisateur correspondant au deuxième type d'action d'utilisateur pour une entrée dans le deuxième agrégateur (AG2).

3. Système de détection de fraude (200) selon la revendication 1, dans lequel le système de détection de fraude est configuré pour mettre fin à la sous-session lors de la réception d'une indication de changement de vue (VCI) .

4. Système de détection de fraude (200) selon une ou plusieurs des revendications précédentes, dans lequel le système de détection de fraude est configuré pour calculer l'au moins une première donnée de capteur agrégée pour une sous-session actuelle parmi la pluralité de sous-sessions en utilisant les premières données d'action d'utilisateur obtenues lors d'au moins une sous-session précédente.

5. Système de détection de fraude (200) selon la revendication 4, dans lequel le système de détection de fraude est configuré pour calculer l'au moins une deuxième donnée de capteur agrégée pour la sous-session actuelle parmi la pluralité de sous-sessions en utilisant uniquement les deuxièmes données d'action d'utilisateur obtenues pendant la sous-session actuelle.

6. Système de détection de fraude (200) selon une ou plusieurs des revendications précédentes, dans lequel le système de détection de fraude est configuré pour appliquer au moins l'un parmi :
au moins un premier seuil pour déterminer si des premières données d'action d'utilisateur de l'au moins une sous-session précédente selon la revendication 4 doivent être utilisées pour fournir la première donnée de capteur agrégée, dans lequel, facultativement, le premier seuil est spécifique au type d'action d'utilisateur ; et
au moins un deuxième seuil pour déterminer si l'au moins une première donnée de capteur agrégée doit être fournie, dans lequel, facultativement, le deuxième seuil est spécifique au type d'action d'utilisateur.

7. Système de détection de fraude (200) selon une ou plusieurs des revendications précédentes, dans lequel le système de détection de fraude est configuré pour fournir un résultat de détection pour la sous-session en combinant au moins une première sortie du premier modèle de capteur entraîné de détection de fraude générique (M1) concernant le premier type d'action d'utilisateur sur une vue et une deuxième sortie du deuxième modèle de capteur entraîné de détection de fraude générique (M2) concernant le deuxième type d'action d'utilisateur sur la vue.

8. Système de détection de fraude (200) selon une ou plusieurs des revendications précédentes, dans lequel le système de détection de fraude est configuré pour obtenir et traiter des troisièmes données d'action d'utilisateur correspondant à un troisième type d'action d'utilisateur, et dans lequel le système de détection de fraude comprend en outre
un troisième modèle de capteur entraîné de détection de fraude générique (M3) relatif à un troisième type d'action d'utilisateur sur la vue parmi les vues ;
un troisième agrégateur (AG3) configuré pour agréger des troisièmes données d'action d'utilisateur obtenues et traitées sur une base par vue afin d'obtenir au moins une troisième donnée de capteur agrégée et de fournir l'au moins une troisième donnée de capteur agrégée à partir des troisièmes données d'action d'utilisateur traitées pour une entrée dans le troisième modèle de capteur entraîné de détection de fraude générique.

9. Système de détection de fraude (200) selon la revendication 8, dans lequel le système de détection de fraude est configuré pour fournir un résultat de détection pour la sous-session en combinant au moins une première sortie du premier modèle de capteur entraîné de détection de fraude générique (M1) concernant le premier type d'action d'utilisateur sur une vue, une deuxième sortie du deuxième modèle de capteur entraîné de détection de fraude générique (M2) concernant le deuxième type d'action d'utilisateur sur la vue et une troisième sortie du troisième modèle de capteur entraîné de détection de fraude générique (M3) concernant le troisième type d'action d'utilisateur sur la vue.

10. Système de détection de fraude (200) selon les revendications 7 ou 9, dans lequel le système de détection de fraude est configuré pour mettre fin à la session utilisateur du dispositif utilisateur (300), ou en déclencher la fin, avec le système en ligne (400) en fonction du résultat de détection.

11. Système de détection de fraude (200) selon une ou plusieurs des revendications précédentes, dans lequel au moins l'un des éléments suivants s'applique :
- les données d'action d'utilisateur concernant le premier type d'action d'utilisateur concernent un élément parmi des données de frappe, des données d'entrée de souris/tactile et des données de navigation du dispositif utilisateur et les données d'action d'utilisateur concernant le deuxième type d'action d'utilisateur concernent un autre élément parmi des données de frappe, des données d'entrée de souris/tactile et des données de navigation, dans lequel, facultativement, dans le cas de la revendication 8, les troisièmes données d'action d'utilisateur concernant le troisième type d'action d'utilisateur concernent un troisième élément parmi des données de frappe, des données d'entrée de souris/tactile et des données de navigation du dispositif utilisateur.
- au moins l'une parmi l'au moins une première donnée de capteur agrégée et l'au moins une deuxième donnée de capteur agrégée est une donnée de capteur agrégée dans le domaine fréquentiel, telle qu'au moins l'une parmi une entropie et une énergie des données d'action d'utilisateur correspondant à au moins le premier et le deuxième type d'action d'utilisateur ;
- au moins l'une parmi l'au moins une première donnée de capteur agrégée et l'au moins une deuxième donnée de capteur agrégée est une donnée de capteur agrégée dans le domaine temporel, telle qu'au moins l'une parmi une variance, une asymétrie, un aplatissement et un percentile des données d'action d'utilisateur correspondant à au moins le premier et le deuxième type d'action d'utilisateur.

12. Procédé de détection de fraude dans un système de détection de fraude (200) pour détecter un comportement d'utilisateur frauduleux sur des vues (V) pendant une session utilisateur (US) d'un dispositif utilisateur (300) avec un système en ligne (400) présentant les vues au dispositif utilisateur, chaque vue parmi les vues correspondant à une sous-session parmi une pluralité de sous-sessions de la session utilisateur, dans lequel le système de détection de fraude comprend au moins
un premier modèle de capteur entraîné de détection de fraude générique (M1) concernant un premier type d'action d'utilisateur sur une vue parmi les vues ;
un deuxième modèle de capteur entraîné de détection de fraude générique (M2) concernant un deuxième type d'action d'utilisateur sur la vue parmi les vues ;
dans lequel le procédé comprend les étapes d'obtention et de traitement de premières données d'action d'utilisateur à partir du dispositif utilisateur correspondant au premier type d'action d'utilisateur et de deuxièmes données d'action utilisateur correspondant au deuxième type d'action d'utilisateur ;
dans lequel le procédé est en outre **caractérisé par** les étapes consistant à
agréger les premières données d'action d'utilisateur obtenues et traitées sur une base par vue afin d'obtenir au moins une première donnée de capteur agrégée et fournir l'au moins une première donnée de capteur agrégée à partir des premières données d'action d'utilisateur traitées pour une entrée dans le premier modèle de capteur entraîné de détection de fraude générique (M1), et
agréger les deuxièmes données d'action d'utilisateur obtenues et traitées sur une base par vue afin d'obtenir au moins une deuxième donnée de capteur agrégée et fournir l'au moins une deuxième donnée de capteur agrégée à partir des deuxièmes données d'action d'utilisateur traitées pour une entrée dans le deuxième modèle de capteur entraîné de détection de fraude générique (M2).

13. Procédé selon la revendication 12, comprenant en outre les étapes consistant à faire fonctionner le système de détection de fraude (200) tel qu'il est défini dans une ou plusieurs des revendications 2 à 11.

14. Produit de programme informatique ou suite de programmes informatiques comprenant une ou plusieurs parties de code logiciel configurées pour, lorsqu'elles sont exécutées sur un ou plusieurs systèmes informatiques, réaliser les étapes du procédé selon la revendication 12 ou 13.

15. Combinaison d'un système en ligne (400) et du système de détection de fraude (200) tel que défini selon une ou plusieurs des revendications 1 à 11, dans laquelle le système en ligne est configuré pour recevoir les premières données d'action d'utilisateur et les deuxièmes données d'action d'utilisateur en provenance du dispositif utilisateur (300) et pour envoyer les premières données d'action d'utilisateur et les deuxièmes données d'action d'utilisateur, ou des échantillons ou dérivés de celles-ci, au système de détection de fraude (200).
